# EUROPÄISCHE PATENTANMELDUNG

(11) **EP 2 873 509 A2**
(43) Veröffentlichungstag der Anmeldung: **20.05.2015**
(21) Anmeldenummer: 14177774.8
(22) Anmeldetag: 21.07.2014
(51) Int. Cl.: B29C 49/36, H02K 26/00, H02K 7/14

(54) **Rundläufermaschine mit Direktantrieb**

(30) Priorität: 13.09.2013 DE 102013218438
(71) Anmelder: Krones AG, 93073 Neutraubling (DE)
(72) Erfinder: Schroll, Bernd, 93073 Neutraubling (DE); Laumer, Roland, 93073 Neutraubling (DE); Humele, Heinz, 93073 Neutraubling (DE); Stoiber, Christian, 93073 Neutraubling (DE); Kraus, Andreas, 93073 Neutraubling (DE); Peutl, August, 93073 Neutraubling (DE)
(74) Vertreter: Grünecker Patent- und Rechtsanwälte PartG mbB

(57) **Zusammenfassung**

Rundläufermaschine, insbesondere Behälterbehandlungsmaschine, umfassend einen rotierenden Teil, der mehrere Behandlungsstationen umfasst, und einen feststehenden Teil, dadurch gekennzeichnet, dass der rotierende Teil und der feststehende Teil so ausgebildet sind, dass sie gemeinsam den Antrieb der Maschine bilden, wobei der rotierende Teil den Rotor und der feststehende Teil den Stator eines Elektromotors bildet.

## Beschreibung

Die vorliegende Erfindung betrifft eine Rundläufermaschine, insbesondere den Antrieb der Rundläufermaschine.

### Stand der Technik

Rundläufermaschinen, beispielsweise in der Getränke verarbeitenden Industrie, sind hinlänglich bekannt. So gibt es beispielsweise Streckblasmaschinen oder Etikettiermaschinen sowie Direktdruckmaschinen zur Behandlung von Behältern, die als Rundläufermaschinen ausgebildet sind und so kontinuierlich und/oder taktend arbeiten können. Die Verbindung zwischen Rundläufer bzw. dem rotierenden Teil dieser Rundläufermaschinen werden häufig über Kugeldrehverbinder realisiert. Diese weisen Verzahnungen auf, so dass eine Verbindung, beispielsweise über ein Ritzel, mit einem Servomotor hergestellt werden kann, der dann das entsprechende Karussell antreibt. Da häufig jedoch sehr komplizierte Getriebesysteme verwendet werden und für ein Karussell teilweise sogar mehrere Servomotoren zum Antrieb vorgesehen sind, kann es hier zu Fehlstellungen kommen, insbesondere aufgrund von Getriebespiel. Das erschwert es, die hohen Genauigkeitsanforderungen, insbesondere beim Etikettieren und Bedrucken von Behältern, zu erfüllen. Weiterhin erweist sich die Schmierung der Lager, in denen das Karussell geführt wird, und der Verzahnungen als sehr aufwendig und es wird ein sehr großer Bauraum zur Unterbringung des gesamten Antriebssystems benötigt.

### Aufgabe

Ausgehend von Stand der Technik ist es daher Aufgabe der vorliegenden Erfindung, ein präzises und gleichzeitig hochflexibles Antriebssystem für eine Rundläufermaschine bereitzustellen.

### Lösung

Diese Aufgabe wird erfindungsgemäß durch die Rundläufermaschine nach Anspruch 1 gelöst. Vorteilhafte Weiterbildungen der Erfindung sind in den Unteransprüchen 2 bis 14 erfasst.

Die erfindungsgemäße Rundläufermaschine zeichnet sich dadurch aus, dass der rotierende Teil und der feststehende Teil so ausgebildet sind, dass sie gemeinsam den Antrieb der Maschine bilden, wobei der rotierende Teil den Rotor und der feststehende Teil den Stator eines Elektromotors bildet. Mit diesem direkten Antrieb kann ein Antrieb des rotierenden Teils der Behälterbehandlungsmaschine bzw. Rundläufermaschine auf technisch einfache Weise erfolgen und auf wartungsintensive Getriebe verzichtet werden. Weiterhin kann die Rotation deutlich präziser eingestellt werden, was die erzielten Behandlungsergebnisse deutlich verbessert.

In der vorgenannten Ausführungsform ist der Stator Teil der die Maschine stützenden Konstruktion. Gemäß einer weiteren Ausführungsform kann daher vorgesehen sein, dass der Stator weiter innen, hin zur Mittelachse der Rundläufermaschine ausgebildet wird und somit getrennt von der die Maschine stützenden Konstruktion bereitgestellt wird. Die stützende Konstruktion ist in dieser Ausführungsform dann vorzugsweise radial außerhalb, d.h. also radial weiter weg von der Mittelachse der Rundläufermaschine als der Stator angeordnet. Diese die Maschine stützende Konstruktion kann ebenfalls als Hohlzylinder ausgebildet sein oder aber als um die Mittelachse der Rundläufermaschine angeordnete einzelne Segmente / Stützen ausgebildet sein. Da der Stator hier dann keine tragende Funktion mehr übernimmt, kann ein leichterer Ausbau, beispielsweise von oben durch den Rotor hindurch erfolgen und insbesondere die gesamte Konstruktion des Stators leichter ausgebildet werden. Besonders vorteilhaft ist hier, wenn der Stator mehrstückig ausgebildet ist, sodass ein Herausnehmen der einzelnen Teile des Stators ohne größeren Aufwand bewerkstelligt werden kann.

In einer weiteren Ausführungsform kann aber auch vorgesehen sein, dass die Maschine abstützende Konstruktion weiter innen, hin zur Mittelachse der Rundläufermaschine ausgebildet wird und somit getrennt vom Stator bereitgestellt wird. Der Stator ist dann in dieser Ausführungsform vorzugsweise an unveränderter Stelle angeordnet. Der Stator ist in dieser Ausführungsform dann vorzugsweise radial außerhalb, d.h. also radial weiter weg von der Mittelachse der Rundläufermaschine als die Maschine stützende Konstruktion angeordnet. Die die Maschine stützende Konstruktion kann ebenfalls als Hohlzylinder ausgebildet sein oder aber als um die Mittelachse der Rundläufermaschine angeordnete einzelne Segmente / Stützen ausgebildet sein. Da der Stator hier dann keine tragende Funktion mehr übernimmt, kann ein leichterer Ausbau, beispielsweise von oben durch den Rotor hindurch erfolgen und insbesondere die gesamte Konstruktion des Stators leichter ausgebildet werden. Besonders vorteilhaft ist hier, wenn der Stator mehrstückig ausgebildet ist, sodass ein Herausnehmen der einzelnen Teile des Stators ohne größeren Aufwand bewerkstelligt werden kann.

In einer Ausführungsform umfassen der feststehende Teil und der rotierende Teil jeweils einen zylindrisch ausgebildeten Bereich, wobei die zylindrischen Bereiche so ausgebildet sind, dass sie ineinandergreifen, und wobei der feststehende Teil im zylindrischen Bereich wenigstens einen Elektromagneten umfasst und der rotierende Teil im zylindrischen Bereich wenigstens einen Magneten umfasst. Durch Wahl der Abmessungen der entsprechend zylindrischen Bereiche kann ein ideales Verhältnis zwischen Größe der zylindrischen Bereiche einerseits und der erzielten Positionsgenauigkeit beim Drehen der Rundläufermaschine andererseits erzielt werden.

Weiterhin kann der rotierende Teil mit dem feststehenden Teil über ein Lager verbunden sein, wobei das Lager entweder ein Dünnringlager, ein Drahtlager, ein vorzugsweise spielfrei vorgespanntes Lager, ein lagerringfreies Vierpunkt-Momenten-Lagerelement ist oder umfasst. Die Ausbildung des Lagers gemäß einiger dieser Ausführungsformen bringt die entsprechenden Vorteile mit sich. Es können sowohl schmiermittelfreie als auch schmiermittelbehaftete Lager Verwendung finden.

Es kann vorgesehen sein, dass die Stromversorgung zur Versorgung der Elektromagneten im feststehenden Teil zu den Elektromagneten geführt wird. So kann die Stromversorgung abgesichert vor Umwelteinflüssen, wie beispielsweise Feuchtigkeit, durch die Rundläufermaschine geführt werden.

Gemäß einer Ausführungsform der Rundläufermaschine ist der Elektromagnet als eine, sich um den gesamten Umfang des Stators erstreckende Spule ausgebildet. Zwar handelt es sich so bei der Spule um ein gegebenenfalls sehr großes Bauteil, jedoch erweist sich der Austausch bei einer Fehlfunktion als relativ einfach, da die gesamte Spule als ein Bauteil herausnehmbar ist.

Gemäß einer Ausführungsform der Rundläufermaschine besteht der Elektromagnet aus mindestens einem Teilsegment, wobei mehrere einzelne Teilsegmente über den gesamten Umfang des Stators ausgebildet sein können. Die elektrische Verbindung der einzelnen Segmente kann beispielsweise mittels Steckerverbinder realisiert werden. Der Austausch bei einer Fehlfunktion ist relativ einfach, da einzelne Segmente radial nach außen herausnehmbar sind.

In einer Ausführungsform ist die Rundläufermaschine dadurch gekennzeichnet, dass der rotierende Teil eine Abdeckung umfasst, die sich wenigstens über den Magneten erstreckt und die zylindrischen Bereiche von der Umgebung zumindest teilweise isoliert. So kann gewährleistet werden, dass sowohl das Lager als auch die elektrischen Bauteile vor Umwelteinflüssen geschützt sind und Wartungs- und Reinigungsarbeiten weniger häufig durchgeführt werden müssen.

In einer weiteren Ausführungsform ist ein Drehgeber vorgesehen, der geeignet ist, die Drehzahl und/oder Drehgeschwindigkeit und/oder Drehposition am rotierenden Teil der Rundläufermaschine zu messen. Da dieser Drehgeber die Drehzahl oder Drehgeschwindigkeit des rotierenden Teils direkt messen kann, ergibt sich eine genauere Drehzahlbestimmung und Positionsbestimmung, verglichen mit aus dem Stand der Technik bekannten Messverfahren.

In einer vorteilhaften Weiterbildung ist eine Schmierleitung vorgesehen, die mit dem Lager verbunden ist und geeignet ist, dem Lager Schmiermittel zuzuführen. So kann gewährleistet werden, dass der Verschleiß des Lagers möglichst minimal ist.

In einer Ausführungsform der Rundläufermaschine sind die zylindrischen Bereiche als Hohlzylindermäntel ausgebildet. Auf diese Weise kann eine ökonomische und deutlich leichtere Bauweise der Rundläufermaschinen realisiert werden.

Es ist vorteilhaft, wenn eine Kühleinheit vorgesehen ist, die geeignet ist, das Lager und/oder den Elektromagneten und/oder den Magneten durch Wärmeaustausch mit einem Kühlmedium zu kühlen. Werden sowohl der Stator als auch der Rotor permanent gekühlt und wird auch das Lager gekühlt, können unerwünschte Fehlfunktionen oder Abnutzungen oder Zerstörungen der einzelnen Bauteile aufgrund der stets konstanten Temperatur vermieden werden.

Es kann vorgesehen sein, dass das Kühlmedium ein Gas oder eine Flüssigkeit ist. Die Gaskühlung ist zwar kostengünstig und wenig störanfällig, jedoch bietet die Flüssigkeitskühlung den Vorteil, dass aufgrund der hohen Wärmekapazität der Flüssigkeit und des besseren Wärmeaustauschs eine effektivere Kühlung realisiert werden kann.

Es kann auch eine passive Kühlung vorgesehen sein, z.B. Kühlrippen/Stege, also Geometrien mit großer Oberfläche und möglichst wärmeleitfähigem Material, welches durch Konvektion und/oder Abstrahlung gekühlt wird.

Weiterhin kann die Rundläufermaschine dadurch gekennzeichnet sein, dass der zylindrische Bereich des rotierenden Teils eine Kreisscheibe umfasst, auf der wenigstens ein Magnet angeordnet ist. In dieser Ausführungsform kann die gesamte Größe des zylindrischen Bereichs des rotierenden Teils reduziert werden und der rotierende Teil beispielsweise auf den stehenden Teil aufgesetzt werden. Die notwendige drehbare Lagerung des Rotors kann über ein entsprechendes Lager realisiert werden.

In einer Ausführungsform der Rundläufermaschine ist der rotierende Teil als in den feststehenden Teil eingreifend ausgebildet oder der feststehende Teil als in den rotierenden Teil eingreifend ausgebildet.

Gemäß einer Ausführungsform kann die Rundläufermaschine eine Etikettiermaschine, eine Streckblasmaschine, eine Direktdruckmaschine oder ein Füller sein. Es kann sich um Maschinen handelt, die sowohl Behälter herstellen (Preform-Spritz-Maschine) als auch Behälter behandeln. Die Ausbildung der Rundläufermaschine als eine dieser Maschinen ermöglicht die Ausnutzung der oben geschilderten Vorteile in den entsprechenden Herstellungs- und Behandlungsschritten für Behälter.

### Kurze Beschreibung der Figuren

- Fig. 1a und 1b: Schematische Darstellung einer erfindungsgemäßen Rundläufermaschine, insbesondere Stator und Rotor.
- Fig. 2: Schematische Darstellung der Verbindung zwischen Stator und Rotor.
- Fig. 3: Schematische Darstellung einer Rundläufermaschine gemäß einer weiteren Ausführungsform.

### Ausführliche Beschreibung

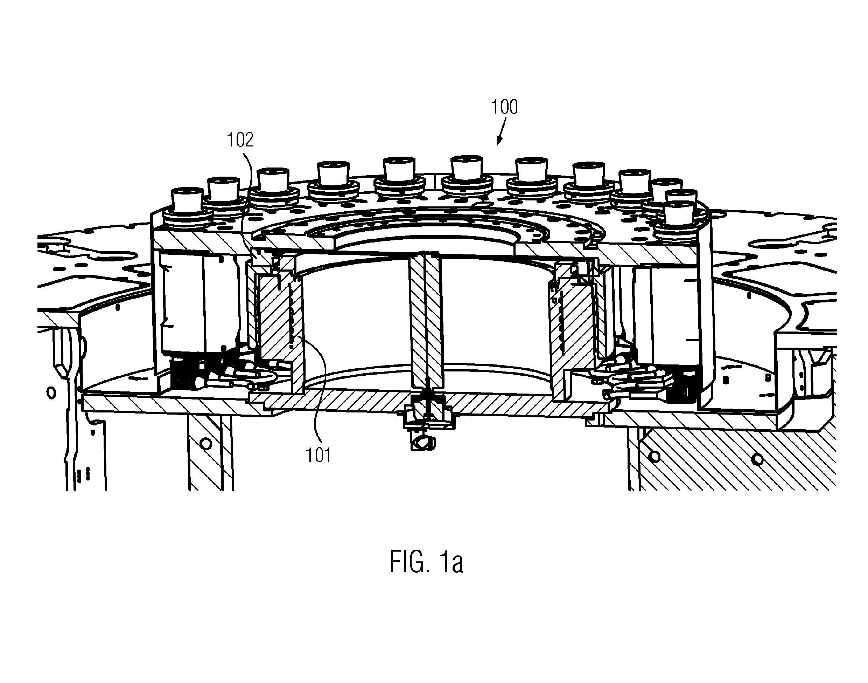

Fig. 1a zeigt eine erfindungsgemäße Rundläufermaschine 100. Diese umfasst einen stehenden Teil 101 und einen rotierenden Teil 102. Üblicherweise sind auf dem rotierenden Teil 102 Behälterbehandlungsstationen oder Behältereinspannstationen oder Elemente zum Fixieren der Behälter oder Behältertransportelemente angeordnet. Je nach Ausführungsform der Rundläufermaschine 100 können sich diese stark unterscheiden. Am Beispiel einer Direktdruckmaschine umfasst der rotierende Teil mehrere Behälterbehandlungsstationen oder Behältereinspannstationen. Diese können beispielsweise einzelne Drehteller und ihnen zugeordnete Druckmodule umfassen. An dem feststehenden Teil 101 der Rundläufermaschine können weitere Bauteile angeordnet sein, wie beispielsweise Tintenvorlagebehälter, Etikettier- oder Druckaggregate oder Ähnliches, je nach Ausführung der Rundläufermaschine. Hier sind bereits unterschiedlichste Ausführungsformen bekannt, die von der Art der Behälterbehandlungsmaschine abhängen können.

Grundsätzlich sind der feststehende Teil 101 und der rotierende Teil 102 über ein Lager miteinander verbunden, so dass der rotierende Teil 102 auf dem feststehenden Teil 101 aufliegt. Durch eine entsprechende Antriebseinheit kann dann der rotierende Teil 102 relativ zum feststehenden Teil 101 in Drehung versetzt werden.

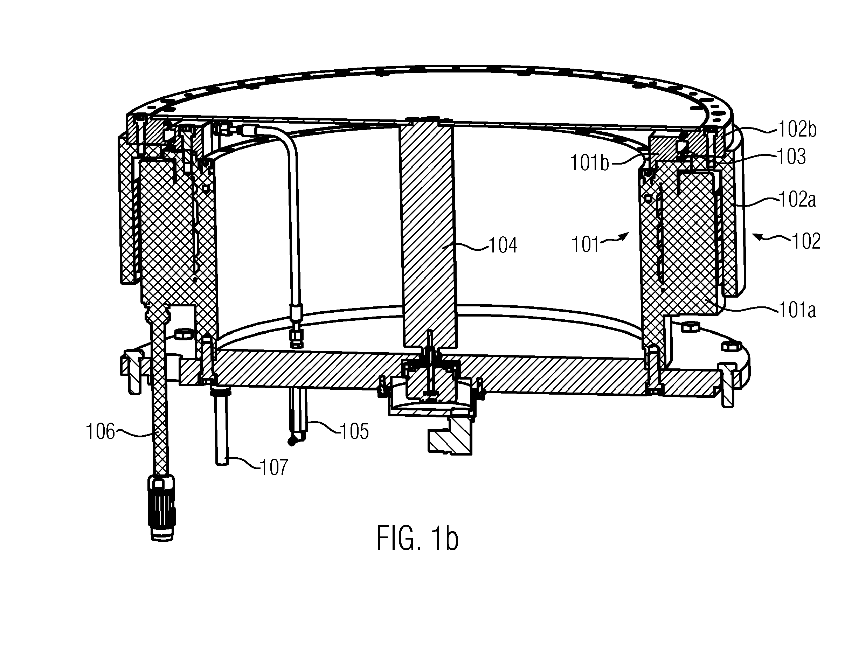

Fig. 1b zeigt eine erfindungsgemäße Ausführung des feststehenden Teils 101 und des rotierenden Teils 102. Erfindungsgemäß ist vorgesehen, dass der feststehende Teil der Rundläufermaschine den Stator und der rotierende Teil 102 der Rundläufermaschine den Rotor eines Elektromotors bilden. Dies wird erreicht, indem beispielsweise im Stator 101 Elektromagneten angeordnet sind, die durch entsprechende Ansteuerung elektromagnetische Wechselfelder erzeugen können. Im rotierenden Teil 102 sind Magneten vorgesehen. Durch die elektromagnetische Wechselwirkung zwischen den Elektromagneten und den Magneten im Stator bzw. Rotor 102 wird dann der Rotor 102 relativ zum Stator 101 in Drehung versetzt. Vorteilhaft ist hier, dass auf zusätzliche Getriebe oder Übersetzungen verzichtet werden kann und die Drehzahl bzw. Drehgeschwindigkeit des Rotors 102 (gleichbedeutend mit dem rotierenden Teil 102) direkt über Änderung der Stromzufuhr zu den Elektromagneten im Stator 101 erzielt werden kann. Da die Übertragung der elektromagnetischen Kraft nicht an den direkten physikalischen Kontakt gekoppelt ist, können die Elektromagneten bzw. Magneten in Stator und Rotor prinzipiell beliebig angeordnet sein. Sie müssen dementsprechend nicht direkt benachbart zueinander angeordnet sein. Es kann jedoch vorteilhaft sein, wenn diese Bauteile möglichst nah an einem Lager, in dem der Rotor 102 um den Stator 101 geführt wird, angeordnet sind. Dabei kann das Lager 103 vielfältig ausgebildet sein. Vorteilhaft ist, wenn das Lager als Dünnringlager ausgebildet ist. Ebenso kann ein Drahtlager oder ein vorzugsweise spielfreies vorgespanntes Lager verwendet werden. Besonders vorteilhaft ist ein lagerringfreies Vierpunkt-Momenten-Lagerelement. Dabei werden der Innenring und der Außenring des Lagers durch rollende Körper, insbesondere Kugeln voneinander getrennt. Für diese Kugeln sind dann vier voneinander getrennte Schienen vorgesehen, in denen diese geführt werden können. Aufgrund der Kugellagerung ist die Verwendung eines solchen Vierpunkt-Momenten-Lagerelements besonders bevorzugt, da es hier zu weniger Verschleiß kommt.

Wie in der Fig. 1b dargestellt, sind sowohl der Stator 101 als auch der Rotor 102 als zumindest teilweise zylinderförmige Bauteile ausgebildet bzw. als Bauteile, die einen zylindrischen Bereich umfassen. Diese fassen in einer Ausführungsform direkt ineinander, wie es in Fig. 1b dargestellt ist. So findet eine zusätzliche Fixierung über das Lager 103 hinaus statt, da die Außenfläche des Stators 101 und die Innenfläche des Rotors 102 (die entsprechenden Mantelflächen) hier eine Begrenzung des Bewegungsspielraums gewährleisten. Diese Ausführung kann weiterhin in vorteilhafter Weise genutzt werden, um die empfindlichen Bestandteile dieses Direktantriebs (insbesondere die Elektromagneten) vor schädlichen Umwelteinflüssen, wie beispielsweise Feuchtigkeit, zu schützen. Der Rotor 102 der in der in Fig. 1 dargestellten Ausführungsform den Stator 101 umgreift, fungiert hier als eine entsprechende Abschirmung. Es kann auch vorgesehen sein, dass der Rotor 102 als in den Stator 101 eingreifend ausgebildet ist.

Die Ausführungsform, in der der Rotor 102 jedoch um den Stator 101 umgreift, ist bevorzugt, da so die Führung von Leitungen im Innenbereich des Stators 101 möglich ist. So kann vorgesehen sein, dass in diesem Innenraum beispielsweise ein Drehgeber 104 angeordnet ist, der mit dem Rotor 102 verbunden sein kann oder zumindest so ausgebildet ist, dass er die Drehbewegung des Rotors 102 messen kann. Auf diese Weise kann die Drehzahl bzw. Drehgeschwindigkeit und/oder die Drehposition des Rotors 102 durch den Drehgeber 104 zu jeder Zeit direkt gemessen werden, ohne dass hier eine indirekte Messung über die Drehzahlmessung eines zusätzlich angeschlossenen Motors erfolgen muss oder über eine Drehzahlmessung eines Getriebes. Die direkte Messung mit dem Drehgeber 104 erlaubt daher eine sehr präzise Messung der Bewegungsparameter des Rotors 102. Weiterhin kann vorgesehen sein, dass z.B. die Schmiermittelzufuhr 105 und/oder die Stromzufuhr 107 ebenfalls durch den inneren Bereich des Stators 101 geführt werden und so die Elektromagneten des Stators 101 mit Strom versorgt und das Lager mit Schmiermittel versorgt werden können. In diesem Zusammenhang ist es vorteilhaft, wenn der Stator 101 als Hohlzylinder bzw. als Hohlzylindermantel ausgebildet ist und möglichst dünnwandig ist, ohne jedoch die Tragfähigkeit des Stators 101 damit signifikant zu beeinträchtigen. Je größer der freie Innenraum des Stators 101 ist, desto mehr empfindliche Bauteile können hier untergebracht werden. Da dieser Bereich durch den Rotor 102 vor Umwelteinflüssen geschützt ist, kann so eine platzsparende Unterbringung von sensiblen Bauteilen gewährleistet werden.

In der dargestellten Ausführungsform ist der Stator 101 Teil der die Maschine stützenden Konstruktion. Probleme am Stator, beispielsweise Fehlfunktionen der Elektromagneten erfordern also einen kompletten Umbau der Maschine, um entsprechende Bauteile zu wechseln oder zu reparieren. Gemäß einer Ausführungsform kann daher vorgesehen sein, dass der Stator 101 weiter innen, hin zum Drehgeber 104 bzw. der Mittelachse der Rundläufermaschine ausgebildet wird und somit getrennt von der die Maschine stützenden Konstruktion bereitgestellt wird. Die stützende Konstruktion ist in dieser Ausführungsform dann vorzugsweise an unveränderter Stelle (also dort, wo in Fig. 1a und Fig. 1b der Stator gezeigt ist) angeordnet. Analog dazu kann aber auch vorgesehen, sein, dass die die Maschine abstützende Konstruktion weiter innen, hin zum Drehgeber 104 bzw. der Mittelachse der Rundläufermaschine ausgebildet wird und somit getrennt vom Stator 101 bereitgestellt wird. Der Stator 101 ist dann in dieser Ausführungsform vorzugsweise an unveränderter Stelle (vgl. Fig. 1a und 1b) angeordnet. Da der Stator 101 in beiden Varianten dann keine tragende Funktion mehr übernimmt, kann ein leichterer Ausbau, beispielsweise von oben durch den Rotor 102 hindurch erfolgen und insbesondere die gesamte Konstruktion des Stators leichter ausgebildet werden. Besonders vorteilhaft ist hier, wenn der Stator 101 mehrstückig ausgebildet ist, sodass ein Herausnehmen der einzelnen Teile des Stators 101 ohne größeren Aufwand bewerkstelligt werden kann.

In einer anderen Ausführungsform kann der Stator 101 auch außerhalb des Rotors 102 realisiert werden, indem die Elektromagneten beispielsweise in den Stator 102 umgebende Pylone eingebaut werden, die mit dem feststehenden Teil der Rundläufermaschine (insbesondere einem Standtisch) verbunden werden. Der Rotor 102 ist dann innerhalb dieses Stators angeordnet, wodurch die einzelnen Bestandteile des Stators leichter erreichbar sind. Diese Ausführungsform erlaubt auch eine einfache Anpassung der Leistungsfähigkeit der Vorrichtung, da ggf. weitere Pylone mit Elektromagneten angebaut werden können. So können in einer Ausführung 4 Pylone vorgesehen sein, die symmetrisch in einem konzentrischen Bereich um den Rotor 102 angeordnet sind. In einer weiteren Ausführungsform können hier 8, 12 oder 16 Pylone vorgesehen sein oder jede beliebige andere Anzahl von Pylonen.

Obwohl der rotierende Teil 102 hier als ganzes mit dem Rotor identifiziert wird und der feststehende Teil 101 mit dem Stator identifiziert wird, kann auch eine zweiteilige oder mehrteilige Ausführung realisiert werden. In einer solchen Ausführungsform kann der rotierende Teil 102 einen Rotor bzw. Rotorbereich 102a umfassen und einen Lagerbereich 102b, in dem beispielsweise ein Teil der Führung für das Lager 103 angeordnet ist. Diese können als separate, aber miteinander verbundene Bauteile ausgebildet sein. So kann der Rotor 102a als Ring vorgesehen sein, der mit dem Lagerbereich 102b bzw. dem übrigen Teil des rotierenden Teils 102 verbunden wird, beispielsweise durch Verschraubung. Dies bietet den Vorteil, dass bei Wartungs- oder Reparaturarbeiten nicht der gesamte rotierende Teil 102 der Rundläufermaschine 100 ausgewechselt werden muss, sondern ein Abbau des Rotors 102a genügen kann. Analog kann auch der feststehende Teil 101 zweiteilig oder mehrteilig ausgeführt sein, wobei der Stator 101a als separates Bauteil vorgesehen sein kann, der mit dem zum Lagerbereich 102b korrespondierenden Lagerbereich 101b des feststehenden Teils 101 verbunden sein kann. Die zweiteilige Ausführung des feststehenden Bereichs bietet weiterhin den Vorteil, dass die Stromzufuhr 107 und die Schmiermittelzufuhr 105 in die jeweiligen Bereiche geführt werden können. So muss bei Wartungsarbeiten für einen Ausbau des Lagers beispielsweise nicht notwendig die gesamte Stromzufuhr zu den Elektromagneten abgebaut werden und umgekehrt. Es genügt dann bei einem Austausch des Lagers oder entsprechenden Wartungsarbeiten die Schmiermittelzufuhr 105 ggf. zu kappen.

Weiterhin kann vorgesehen sein, dass dem Stator 101 ein Kühlsystem 106 zugeordnet ist, das ein Kühlmedium in den Stator 101 einleiten kann bzw. zumindest eine Kühlung derart bewirken kann, dass die Elektromagneten des Stators 101, die Magneten des Rotors 102 und das Lager 103 gekühlt werden. Vorteilhaft ist, wenn das Kühlsystem so ausgebildet ist, dass eine Kühlung dieser drei Baugruppen gleichzeitig erfolgen kann. Hierfür ist es besonders vorteilhaft, wenn die Magneten und Elektromagneten möglichst nah am Lager angeordnet sind. Das Kühlsystem kann jedoch auch aus 3 Einzelkühlsystemen bestehen (Elektromagnetkühlung, Magnetkühlung, Lagerkühlung), wobei diese dann vorzugsweise separat ausgebildet und ansteuerbar sind.

Das Kühlsystem kann prinzipiell beliebig ausgebildet sein, es bietet sich jedoch eine Gaskühlung oder eine Flüssigkeitskühlung, beispielsweise mit Wasser, an. Dazu können entsprechende Rohrleitungen und Kanäle durch den Stator 101 gezogen werden, die das Kühlmedium in diesem verteilen. Da eine Flüssigkeitskühlung besonderen Anforderungen gerecht werden muss, wenn sie zur Kühlung von elektronischen Bauteilen verwendet wird, kann vorgesehen sein, dass bei Verwendung einer Flüssigkeitskühlung nur ein indirekter Wärmeaustausch über eine Trennwand (beispielsweise eine dünne Wand aus Aluminium oder ähnlichem Material) erfolgt. So kann ein Wärmeaustausch zwischen den Elektromagneten und der Kühleinheit 106 bewerkstelligt werden und gleichzeitig das Risiko von Schäden und Kurzschlüssen reduziert, vorzugsweise vermieden werden. Zusätzlich zu dieser Kühleinheit kann eine weitere Kühleinheit oder dieselbe Kühleinheit vorgesehen sein, um auch den Innenraum des Stators 101 zu kühlen, in dem, wie bereits vorher erwähnt, empfindliche Baugruppen, wie Steuereinheiten oder Elektronik, angeordnet sein können. Weiterhin kann über eine entsprechend vorgesehene Leitung dem Lager 103 permanent Schmiermittel zugeführt werden, so dass der entstehende Abrieb und Reibungseffekte möglichst minimiert werden, was die Energieeffizienz der Rundläufermaschine erhöht.

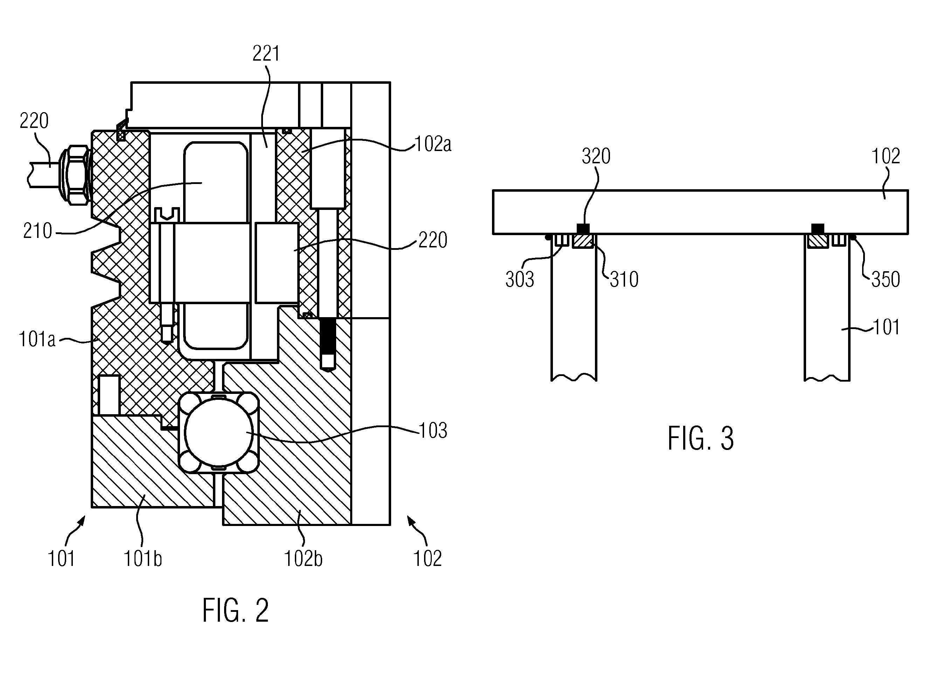

Obwohl die Anordnung der Magneten und Elektromagneten im Stator und Rotor prinzipiell beliebig ist, kann es vorteilhaft sein, die Magneten und Elektromagneten möglichst nah beieinander anzuordnen. Dazu zeigt Fig. 2 eine mögliche Ausführungsform von Stator und Rotor bzw. feststehenden Teil 101 und rotierenden Teil 102 der Rundläufermaschine. In der hier dargestellten Ausführungsform umfasst der Stator 101 einen oder mehrere Elektromagneten 210, die beispielsweise entlang der Peripherie des in Fig. 1 dargestellten zylindrischen Teils des Stators 101 angeordnet sind. Es können hier eine Vielzahl einzelner und einzeln ansteuerbarer Elektromagneten 210 am gesamten Umfang des Stators 101 verteilt sein. Es kann jedoch auch vorgesehen sein, dass eine Spule eingesetzt wird, die sich um den gesamten Umfang oder einem Bereich des Stators erstreckt. Wie in Fig. 2 dargestellt, sind die Magneten 220 des Rotors 102 den Elektromagneten 210 direkt benachbart. Da die Feldstärke elektromagnetischer Felder mit wachsender Entfernung abnimmt, ist diese Anordnung der Magneten und Elektromagneten besonders bevorzugt, da kaum Verluste auftreten, wenn der Abstand zwischen Elektromagnet und Magnet nur wenige Millimeter beträgt. Die in Fig. 2 dargestellte Ausführungsform zeichnet sich auch dadurch aus, dass die Elektromagneten 210 des Stators 101 bzw. die Magneten 220 des Rotors 102 der Lagerung 103 direkt benachbart sind. Weiterhin ist die Stromzufuhr 230 dargestellt, die die Elektromagneten 210 mit Strom versorgt. Ist nur eine durchgängige Spule vorgesehen, die am Stator 101 befestigt ist, so genügt eine einzige Stromzufuhr 230. Ist eine Vielzahl von separaten Elektromagneten 210 vorgesehen, so können von einer zentralen Stromversorgung mehrere Leitungen abgehen, die die einzelnen Elektromagneten mit Strom versorgen oder aber es kann eine Verbindung mittels stromführender Leitungen zwischen den einzelnen Elektromagneten realisiert werden, wobei hier eine Stromversorgung von nur einer zentralen Stromquelle ebenfalls denkbar wäre. Der Bereich 221 zwischen den Magneten 220 und den Elektromagneten 210 ist vorzugsweise mit Luft gefüllt. Da die einzelnen Bestandteile Stator 101 und Rotor 102 nicht luftdicht von der Umgebung abgetrennt sein müssen, kann es sich bei dieser Luft um die normale Umgebungsluft handeln. Es kann jedoch auch vorteilhaft sein, wenn bei Verwendung einer Gaskühlung das Kühlgerät geeignet ist, Luft in diesen Zwischenbereich zur Kühlung einzubringen. So kann auch die Oberfläche der Magneten und Elektromagneten an dieser Seite gekühlt werden.

Fig. 3 zeigt eine weitere Ausführungsform, bei der der Stator 101 vom Rotor 102 nicht vollständig umfasst wird und in der der Rotor 102 als Kreisscheibe ausgebildet ist. In diesem Fall sind die Elektromagneten 310 des Stators 101 nicht seitlich sondern auf der Oberkante des Stators 101 angeordnet. Selbiges gilt für die Führung 303, obwohl diese auch seitlich angebracht sein kann und über eine entsprechende Verlängerung des Rotors 102 eine Verbindung mit dem Stator 101 bilden kann. Die Magneten 320 des Rotors 102 sind auf der dem Stator 101 zugewandten Seite angeordnet. Um sowohl das Lager als auch die Elektromagneten und die Magneten vor schädlichen Umwelteinflüssen zu schützen, kann nach außen hin eine Ringdichtung 350 vorgesehen sein, die den inneren Bereich des Stators 101 von der Umgebung abschirmt. Ebenso kann jedoch, wie in den vorherigen Ausführungsformen gezeigt, eine zylindermantelförmige Verlängerung des Rotors 102 vorgesehen sein, die den Stator 101 von außen umgreift. Eine solche berührungslose Abschirmung ist grundsätzlich bevorzugt.

Da die durch die Lagerung entstehenden Reibungsverluste relativ gering sind, und die erzeugten elektromagnetischen Felder direkt zum Antrieb des Rotors 102 in allen Ausführungsformen genutzt werden können, genügt es, wenn die Elektromagneten im Stator 101 Wechselfelder mit einer maximalen Flussdichte von 1T bilden, so dass der Rotor 102 in Drehung versetzt werden kann. Um die benötigte Flussdichte zu reduzieren, kann vorgesehen sein, dass eine Vielzahl von Baugruppen auf dem Stator oder einem feststehenden Tisch oder zusätzlichem Bauteil angeordnet sind, so dass der Rotor 102 möglichst leicht ausgeführt werden kann, was die benötigte Energiemenge zum Antrieb reduziert.

Der hier vorgestellte Antrieb für Rundläufermaschinen kann grundsätzlich für sämtliche Behälterbehandlungsmaschinen genutzt werden, insbesondere auch für Preform-Spritzmaschinen, mit denen Kunststoffpreforms zur Herstellung von Behältern produziert werden können, sowie Streckblasmaschinen, die z.B. diese Preforms zu Flaschen verarbeiten können. Weiterhin kann ein entsprechender Antrieb in Füllern, Verschließern, Rinsern sowie Inspektionsmaschinen für leere und/oder volle Flaschen zum Einsatz kommen. Besonders vorteilhaft ist die Verwendung dieser Antriebe für Etikettiermaschinen sowie für Behälterverteil- und/oder Ausrichtmaschinen und für Direktdruckmaschinen, da der verwendete Direktantrieb eine sehr präzise Steuerung der Bewegung des Rotors erlaubt. Dies ist gerade beim Direktbedrucken von Behältern vorteilhaft, da hier eine sehr präzise Ausrichtung der Behälter in Relation zu den einzelnen Druckmodulen notwendig ist. Mit dem erfindungsgemäßen Direktantrieb kann eine entsprechende Positionierung auf wenige Millimeter bis hin zu wenigen Hundertstel oder Zehntel Millimetern genau erfolgen, was die Qualität der aufgebrachten Druckbilder erheblich verbessert.

## Patentansprüche

1. Rundläufermaschine (100), insbesondere Behälterbehandlungsmaschine, umfassend einen rotierenden Teil (102), der mindestens eine Behandlungsstation umfasst, und einen feststehenden Teil (101), **dadurch gekennzeichnet, dass** der rotierende Teil (102) und der feststehende (101) Teil so ausgebildet sind, dass sie gemeinsam den Antrieb der Maschine bilden, wobei der rotierende Teil (102) den Rotor und der feststehende Teil (101) den Stator eines Elektromotors bildet.

2. Rundläufermaschine (100) nach Anspruch 1, **dadurch gekennzeichnet, dass** der feststehende Teil (101) und der rotierende Teil (102) jeweils einen zylindrisch ausgebildeten Bereich umfassen, wobei die zylindrischen Bereiche so ausgebildet sind, dass sie ineinandergreifen, und wobei der feststehende Teil im zylindrischen Bereich wenigstens einen Elektromagneten (210) umfasst und der rotierende Teil im zylindrischen Bereich wenigstens einen Magneten (220) umfasst.

3. Rundläufermaschine (100) nach Anspruch 1 oder 2, **dadurch gekennzeichnet, dass** der rotierende Teil (102) mit dem feststehenden Teil (101) über ein Lager (103) verbunden ist, wobei das Lager entweder ein Dünnringlager, ein Drahtlager, ein vorgespanntes Lager, ein lagerringfreies Vierpunkt-Momenten-Lagerelement ist oder umfasst.

4. Rundläufermaschine (100) nach Anspruch 2 oder 3, **dadurch gekennzeichnet, dass** die Stromversorgung (107) zur Versorgung der Elektromagneten (210) im feststehenden Teil (101) zu den Elektromagneten (210) geführt wird.

5. Rundläufermaschine (100) nach einem der Ansprüche 2 bis 4, **dadurch gekennzeichnet, dass** der Elektromagnet (210) als eine, sich um mindestens einen Teilumfang des Stators erstreckende Spule ausgebildet ist.

6. Rundläufermaschine (100) nach einem der Ansprüche 1 bis 4, **dadurch gekennzeichnet, dass** der Elektromagnet (210) wenigstens ein Teilsegment umfasst, wobei mehrere einzelne Teilsegmente über den gesamten Umfang des Stators ausgebildet sein können.

7. Rundläufermaschine (100) nach einem der Ansprüche 2 bis 6, **dadurch gekennzeichnet, dass** der rotierende Teil (102) eine Abdeckung umfasst, die sich wenigstens über den Magneten (220) erstreckt und die zylindrischen Bereiche von der Umgebung zumindest teilweise isoliert.

8. Rundläufermaschine (100) nach einem der Ansprüche 1 bis 7, **dadurch gekennzeichnet, dass** ein Drehgeber (104) vorgesehen ist, der geeignet ist, die Drehzahl und/oder Drehgeschwindigkeit und/oder Drehposition am rotierenden Teil (102) der Rundläufermaschine zu messen.

9. Rundläufermaschine (100) nach einem der Ansprüche 1 bis 8, **dadurch gekennzeichnet, dass** eine Schmiermittelzufuhr (105) vorgesehen ist, die mit dem Lager (103) verbunden ist und geeignet ist, dem Lager Schmiermittel zuzuführen.

10. Rundläufermaschine (100) nach einem der Ansprüche 2 bis 9, **dadurch gekennzeichnet, dass** die zylindrischen Bereiche als Hohlzylindermäntel ausgebildet sind.

11. Rundläufermaschine (100) nach einem der Ansprüche 2 bis 10, **dadurch gekennzeichnet, dass** eine Kühleinheit (106) vorgesehen ist, die geeignet ist, das Lager (103) und/oder den Elektromagneten (210) und/oder den Magneten (220) durch Wärmeaustausch mit einem Kühlmedium zu kühlen.

12. Rundläufermaschine (100) nach Anspruch 11, **dadurch gekennzeichnet, dass** das Kühlmedium ein Gas oder eine Flüssigkeit ist.

13. Rundläufermaschine (100) nach einem der Ansprüche 2 bis 12, **dadurch gekennzeichnet, dass** der zylindrische Bereich des rotierenden Teils (102) eine Kreisscheibe umfasst, auf der der wenigstens eine Magnet (320) angeordnet ist.

14. Rundläufermaschine (100) nach einem der Ansprüche 1 bis 13, **dadurch gekennzeichnet, dass** der rotierende Teil (102) als in den feststehenden Teil (101) eingreifend ausgebildet ist oder der feststehende Teil als in den rotierenden Teil eingreifend ausgebildet ist.

15. Rundläufermaschine (100) nach einem der Ansprüche 1 bis 14, **dadurch gekennzeichnet, dass** die Rundläufermaschine entweder als Etikettiermaschine, als Streckblasmaschine, als Direktdruckmaschine, als Verschließer, als Rinser, als Inspektionsmaschine oder als Füller ausgebildet ist.
